# EUROPEAN PATENT APPLICATION

(11) **EP 3 241 818 A1**
(43) Date of publication of application: **08.11.2017**
(21) Application number: 16168465.9
(22) Date of filing: 05.05.2016
(51) Int. Cl.: C05F 11/02

(54) **FORMULATION**

(71) Applicant: AC Innovations Ltd, Morpeth, Northumberland NE61 3RA (GB)
(72) Inventor: CALLAGHAN, Anthony Gerard, Morpeth, Northumberland NE61 3RA (GB)
(74) Representative: Stuttard, Garry Philip

(57) **Abstract**

The present invention relates to a formulation for promoting the formation of colloidal humus in organic matter.

## Description

The present invention relates to a formulation for promoting the formation of colloidal humus in organic matter (*eg* organic waste), to the use of the formulation in preparing a soil amendment (*eg* compost or a Terra Preta-type soil) and to a process for forming a colloidal humus-enriched soil amendment.

It is well known that the colloidal humus fraction of soil organic matter (SOM) controls soil fertility. This is attributable to the high cation exchange capacity (CEC), water holding capacity (WHC), water retention, wettability and ability to aggregate soil particles (*ie* create good tilth) of the colloidal humus. SOM may be absent from infertile soils and present in amounts up to 12% in highly fertile soils. The amount of SOM in most soils is 2-3%.

There is ongoing debate over the nature and definition of humus as a component of SOM. The classical view is that humus is the SOM fraction composed of fulvic acid, humic acid and humin which are formed by chemical pathways. There are new models that describe the whole of the SOM as one super macromolecular structure (SMM) which is colloidal and contains many carbon compounds bound into a single refractory material.

When separated, SOM and individual humus compounds are readily degradable by microbes and bacteria in a 10-year time scale. This is similar to other lignin/aromatic ring based biogenic carbon compounds. There is no satisfactory explanation for why humus exists and only a partial rationale (based on physical and chemical barriers) for why it can persist in soil for hundreds (and in some cases thousands) of years.

Composting refers to the decomposition of organic matter by microbes and bacteria in the presence of water, enzymes and carbon compounds over a wide range of pH, oxygen concentration, water content and temperature. Under natural conditions, small amounts of colloidal humus are formed (typically less than 5%) whilst more than 95% of the mature compost matrix is partially degraded, brown, particulate organic matter (POM).

Numerous aerobic methods have been devised to convert organic waste into compost and other soil amendments. One such soil amendment is biochar (soil charcoal) which has been used for many years mainly to reduce the odour of (*ie* sweeten) compost but which is also added to soil to improve fertility. Biochar acts as a beneficial environment for microbes. There are ancient methods for making artificial Terra Preta (ATP) or Amazonian Dark Earths (ADE) using charcoal. However biochar is difficult to handle. The fine powder suffers wind-blown losses and has a tendency to self-heat and combust when stored in large tonnage.

Various chemical reagents have been shown to increase the production of fulvic and humic acid in soil. However many of these reagents are not economically viable. Moreover current wisdom does not fully resolve which components make Terra Preta fertile or how to convert a soil into a highly fertile soil. Such an understanding would have a profound impact on world food production.

The present invention seeks to improve humification of organic matter.

Thus viewed from a first aspect the present invention provides a formulation for promoting the formation of colloidal humus in organic matter comprising (*eg* consisting essentially of) a dry particulate mixture of wood biochar and ash.

The formulation of the invention typically promotes the formation of concentrated colloidal humus (15-40% of the total dry weight) in composting systems that conventionally generate <5% colloidal humus. The formulation serves to physically and chemically stabilise the colloidal humus to produce (for example) a soil amendment (*eg* compost) which is highly resistant to biodegradation. By protecting bacteria as a biofilm in a matrix which results from the formation of colloidal humus within wood biochar pores, the formulation achieves exemplary increases in mean residence time (MRT) in compost from 5 years to 100 years or more and raises the prospect of a cheap low cost carbon sequestration technology.

The organic matter may be organic waste. The organic matter may be or comprise plant residues, animal residues or food. The organic matter may be soil organic matter. The organic matter may be biomass.

The dry particulate mixture may be powdered and/or granular. The dry particulate mixture may be microparticulate.

Preferably the wood biochar is present in the dry particulate mixture in the range 25 to 75wt%, particularly preferably 35 to 65wt%, more preferably 45 to 55wt%, especially preferably about 50wt%.

Preferably the ash is present in the dry particulate mixture in the range 25 to 75wt%, particularly preferably 35 to 65wt%, more preferably 45 to 55wt%, especially preferably about 50wt%.

Preferably the wood biochar and ash are present in the dry particulate mixture in a weight ratio in the range 3:1 to 1:3, particularly preferably 2:1 to 1:2, more preferably 3:2 to 2:3, especially preferably about 1:1.

The ash may be bottom ash or fly ash. The bottom ash or fly ash may be substantially metal-free.

The ash may be incinerator ash, furnace ash or boiler ash.

Preferably the ash is microparticulate.

Preferably the ash has an average particle size of less than 50 microns.

Preferably the ash has a particle size distribution characterised by substantially 100% pass through a 500 micron sieve (35 mesh).

In a preferred embodiment, the ash is wood ash. Particularly preferably the wood ash is virgin wood ash.

The wood ash may be obtained by combustion of wood in a biomass boiler.

The wood ash may be waste wood ash. The waste wood ash may be substantially metal-free.

Typically the wood ash has a high calcium oxide content. Preferably the wood ash has a calcium oxide content in excess of 40wt%. The presence of high levels of calcium oxide facilitates the formation of colloidal humus.

In a preferred embodiment, the ash is coal ash.

The wood biochar may be obtained by pyrolysis of wood.

The wood biochar may be soft wood biochar or hard wood biochar.

Preferably the wood biochar has an average particle size of less than 500 microns.

Preferably the wood biochar has a particle size distribution characterised by substantially 100% pass through a 2mm sieve (10 mesh).

The wood biochar typically has a porous and/or hollow channel structure.

Preferably the wood biochar substantially retains the porous and/or hollow channel structure characteristic of wood. Particularly preferably the porous and/or hollow channel structure has pores and/or channels having a diameter in the range 10 to 500 microns.

The formulation may further comprise a bulking agent. The bulking agent may be wood chip or charcoal chip.

The formulation may promote the formation of colloidal humus in organic matter to a concentration of 5% or more, preferably a concentration in the range 15 to 40%.

Viewed from a further aspect the present invention provides a process for forming a colloidal humus-enriched soil amendment comprising:
containing water-saturated organic matter in sub-oxic and alkaline conditions in a container; and
adding a formulation as hereinbefore defined to the water-saturated organic matter in the container.

The soil amendment may be compost, a Terra Preta-type soil or mulch.

The organic matter may be as hereinbefore defined.

The sub-oxic conditions may be 5 to 10% as measured by a gaseous flow meter. Preferably the sub-oxic conditions are associated with a saturated oxygen content of 3-5% (3-5 ppm) in water (or 1-2ppm when corrected for a composting temperature of 30-70°C).

Preferably the alkaline conditions are provided by a pH of the water in the range 8.5 to 10.5.

The amount of water in the water-saturated organic matter may be in excess of 50% by volume, preferably in excess of 60% by volume.

The process may further comprise:
adding water to organic matter to form the water-saturated organic matter.

Preferably during the formation of the colloidal humus-enriched soil amendment the water-saturated organic matter is substantially non-agitated (*eg* stationary). For example, the container may be a static container. The container may be non-rotary.

Typically the container is a composter (*eg* a vertical composter).

The formulation may be added in an amount in the range 1 to 10% of the weight of the water-saturated organic matter, preferably 1 to 8% of the weight of the water-saturated organic matter, particularly preferably 1 to 4% of the weight of the water-saturated organic matter, more preferably about 2% of the weight of the water-saturated organic matter.

The formulation may be added in multiple doses (*eg* weekly doses).

The process may further comprise:
adding a bulking agent to the water-saturated organic matter.

The bulking agent may be wood chip or charcoal chip.

The bulking agent may be added in an amount in the range 1 to 10% of the volume of the water-saturated organic matter, preferably 2 to 8% of the volume of the water-saturated organic matter, particularly preferably 3 to 6% of the volume of the water-saturated organic matter, more preferably about 5% of the volume of the water-saturated organic matter.

Viewed from a yet further aspect the present invention provides the use of a formulation as hereinbefore defined in the preparation of a soil amendment.

The present invention will now be described in a non-limitative sense with reference to an Example.

### Example

An embodiment of the present invention was illustrated using the HOTBIN composting system. This is an insulated, vertical, plug flow-type composting system of the type shown in EP-A-2589581. The identity of the chosen composting system is important only insofar as it acts as a convenient container to control composting.

A vertical plug-flow system (such as HOTBIN) requires no turning of waste. This affects the aeration (volume of air /oxygen) entering the waste. The combination of sealed container controlled via a slight backpressure (valve) results in a steamy environment with a high hot water content (>60% moisture). The active zone is *neither* under aerated (resulting in an anaerobic environment and putrid odours) *nor* highly aerated but is aerated by natural air buoyancy resulting from the rising heat/water/carbon dioxide.

In a more traditional open-windrow system, waste material is shredded and the bulking agent/formulation is mixed in. The windrow is then laid down and normally turned between 1-10 times to maintain oxic (aerobic) conditions. However according to the process of the invention humification increases when sub-oxic conditions are implemented by modifying the turning protocol.

### Formulation

The formulation is a powder formed from a dry mix of:
- 50% wood biochar particles derived from pyrolysis of wood organic matter (100% pass through a 2mm sieve (10 mesh) resulting in a range of particles from powder to granules) and
- 50% wood ash (bottom ash derived from the combustion of clean (virgin) wood) with 100% pass through a 500 micron sieve (35 mesh).

### Process

- Shred waste materials to pieces below 2 cm
- Add the waste via a bucket to create a new layer in the HOTBIN
- Mix in bulking agent (*eg* wood chip or charcoal chip) at the normal volume ratio 0.5litres/10 litres (1:20)
- Mix in the formulation in the ratio 2% by weight (*ie* 100g / 5000g compost waste) - in most cases the compost will have a bulk density of 0.5 g/l so this is also 2% by volume
- For convenience, the last two steps can be combined by pre-mixing the bulking agent with the formulation
- Since the HOTBIN provides a continuous process, the mixing steps are repeated each week
- A layer of colloidal humus-containing compost builds-up in the base. Eventually the space in the top is no longer available and the layer is removed from the base.

### Tests

The oxygen level can be determined using a typical oxygen flow meter. The ppm gaseous reading has to be calibrated back manually or via the reader software to the saturated oxygen in water level and then adjusted for the composting temperature (Dalton's law). The sub-oxic region defined by a reading of 5-10% (5-10ppm) is associated with a saturated oxygen content of 3-5% (3-5 ppm) in water which then becomes 1-2 ppm at a typical compost temperature of 30-70°C.

It is not straightforward to measure colloidal humus content. Normal techniques seek to extract each of the organic components such as carbohydrates, proteins, fulvic and humic acids. However it is increasingly apparent that colloidal humus is more than just the fulvic acid and humic acid components and that this type of analysis destroys the supra-macromolecular nature of the colloidal humus.

Water holding capacity (WHC) is the % of moisture held at a given temperature and pressure (normally room temperature and atmospheric pressure) and was used as a proxy for the presence of colloidal humus (CH). Each soil, compost and formulation component has a defined WHC. The WHC of biochar is X3 own weight, POM X2, CH X9, clay X1.5 and sand X0. A matrix of given composition has a total WHC based on the weighted average of components. For any compost/colloidal humus matrix with a given WHC and known % of POM (>1mm), biochar and clay/sand can thus be used to determine the probable (%) colloidal volume with x9 WHC. It can be proven that compost with a typical moisture content of 50% is due to the presence of POM (>1mm). However a compost/humus matrix with a moisture content of 70% to 90% is due to additional colloidal humus content.

Mean residence time (MRT) is measured by standardised test methods such as Dewar flask respiration or the Solvita CO₂ soil/compost respiration method. Samples of extracted CH showed a MRT in excess of 100 years.

## Claims

1. A formulation for promoting the formation of colloidal humus in organic matter comprising a dry particulate mixture of wood biochar and ash.

2. A formulation as claimed in claim 1 wherein the wood biochar and ash are present in the dry particulate mixture in a weight ratio in the range 3:1 to 1:3.

3. A formulation as claimed in claim 1 or 2 wherein the ash has an average particle size of less than 50 microns.

4. A formulation as claimed in any preceding claim wherein the ash has a particle size distribution **characterised by** substantially 100% pass through a 500 micron sieve.

5. A formulation as claimed in any preceding claim wherein the ash is wood ash.

6. A formulation as claimed in claim 5 wherein the wood ash has a calcium oxide content in excess of 40wt%.

7. A formulation as claimed in any preceding claim wherein the wood biochar has an average particle size of less than 500 microns.

8. A formulation as claimed in any preceding claim wherein the wood biochar has a particle size distribution **characterised by** substantially 100% pass through a 2mm sieve.

9. A formulation as claimed in any preceding claim wherein the wood biochar substantially retains the porous and/or hollow channel structure characteristic of wood.

10. A formulation as claimed in claim 9 wherein the porous and/or hollow channel structure has pores and/or channels having a diameter in the range 10 to 500 microns.

11. A process for forming a colloidal humus-enriched soil amendment comprising:
containing water-saturated organic matter in sub-oxic and alkaline conditions in a container; and
adding a formulation as defined in any of claims 1 to 10 to the water-saturated organic matter in the container.

12. A process as claimed in claim 11 wherein the sub-oxic conditions are associated with a saturated oxygen content of 3-5% in water.

13. A process as claimed in claim 11 or 12 wherein the alkaline conditions are provided by a pH of the water in the range 8.5 to 10.5.

14. A process as claimed in any of claims 11 to 13 wherein the amount of water in the water-saturated organic matter is in excess of 60% by volume.

15. The use of a formulation as defined in any of claims 1 to 10 in the preparation of a soil amendment.
